# EUROPÄISCHE PATENTSCHRIFT

(11) **EP 2 430 328 B1**
(45) Veröffentlichungstag und Bekanntmachung des Hinweises auf die Patenterteilung: **09.01.2013**
(21) Anmeldenummer: 10717171.2
(22) Anmeldetag: 07.05.2010
(51) Int. Cl.: F16F 9/348

(54) **FEDEREINHEIT FÜR EINEN DÄMPFER UND ZUGEHÖRIGER DÄMPFER**
SPRING UNIT FOR A DAMPER AND RELATED DAMPER
UNITÉ RESSORT POUR UN AMORTISSEUR ET AMORTISSEUR ASSOCIÉ

(30) Priorität: 13.05.2009 DE 102009003050
(43) Veröffentlichungstag der Anmeldung: 21.03.2012
(73) Patentinhaber: Robert Bosch GmbH, 70442 Stuttgart (DE)
(72) Erfinder: KRATZER, Dietmar, 71732 Tamm (DE)
(86) Internationale Anmeldenummer: PCT/EP2010/056257
(87) Internationale Veröffentlichungsnummer: WO 2010/130653

(56) Entgegenhaltungen:
- DE-A1-102007 025 966
- DE-A1-102008 042 619
- JP-A- 8 014 306

## Beschreibung

### Stand der Technik

Die Erfindung betrifft eine Federeinheit für einen Dämpfer nach der Gattung des unabhängigen Patentanspruchs 1 und einen korrespondierenden Dämpfer, insbesondere für ein Fahrzeug, der mindestens eine solche Federeinheit umfasst.

Eine derartige Federeinheit ist beispielsweise bekannt aus der JP 8 014306 A.

Darüber hinaus sind aus dem Stand der Technik passive Stoßdämpferkolben bekannt, bei denen in der Regel Federeinheiten mit als Federpakete ausgeführten Federelementen eingesetzt werden, die aus mehreren Federscheiben zur Erzeugung einer bestimmten Dämpfungskraftkennlinie bestehen. Die Federsteifigkeit des Federpakets in diesen konventionellen Stoßdämpferkolben wird einmalig während der Entwicklung abgestimmt und lässt sich danach nicht mehr verstellen. Dieses Prinzip ermöglicht einen kostengünstigen und robusten Aufbau eines Dämpferkolbens bei gleichzeitig sehr guten und in der Praxis bewährten Verläufen der Dämpferkennlinien.

In der Offenlegungsschrift DE 10 2006 037 172 A1 wird ein Dämpfer für ein Fahrzeug beschrieben. Der beschriebene Dämpfer umfasst einen Dämpferzylinder, in welchem ein Kolbenstempel über eine Kolbenstange geführt ist. Zur Einstellung von Dämpferkennwerten ist der Durchfluss eines Dämpferfluids regelbar. Zu diesem Zweck sind innerhalb des Dämpferzylinders Regelungsmittel angeordnet, welche zwei unabhängige Regelkreise für eine Zugstufenperiode und eine Druckstufenperiode aufweisen, wobei die Regelungsmittel den Durchfluss des Dämpferfluids während der Druckstufenperiode in eine erste Durchflussrichtung mit ersten Verstellmitteln und während der Zugstufenperiode in eine zweite Durchflussrichtung mit zweiten Verstellmitteln regeln. Die Verstellmittel umfassen auf Federpaketen verschiebbare Schiebeeinheiten, die durch Verschieben auf den Federpaketen die Biegebalkenlänge der Federpakete und damit die Steifigkeit der Federpakete verändern. Die Verstellgrößen für die Verstellmittel können beispielsweise durch Auswerten von Signalen von Sensoreinheiten ermittelt werden. Die Sensoreinheiten sind beispielsweise als Drucksensoren, Beschleunigungssensoren und/oder Wegesensoren ausgeführt und umfassen zur Ansteuerung und Signalauswertung zugehörige Elektronikschaltungen.

Aus der Offenlegungsschrift DE 10 2007 025 966 A1 ist eine gattungsgemäße Federeinheit bekannt. Die Federeinheit weist mindestens ein Federelement auf, das beispielweise als Federscheibe ausgeführt werden kann. Das Federelement ist in einen Lagerbereich eines Trägerelementes eingelegt. Mit dem Federelement ist zur Einstellung von Dämpferkennwerten ein Fluss eines Dämpferfluids durch mindestens einen Durchflusskanal regelbar. Zur Vorgabe einer Dämpfungskennliniencharakteristik weist die Trägereinheit im Bereich des Durchflusskanals einen Steuerspalt auf.

### Offenbarung der Erfindung

Die erfindungsgemäße Federeinheit für einen Dämpfer mit den Merkmalen des unabhängigen Patentanspruchs 1 hat demgegenüber den Vorteil, dass das mindestens eine Federelement eine Federscheibe mit einer ausgeschnittenen Federzunge aufweist, die mit einer Innenwand des Durchflusskanals den mindestens einen Steuerspalt bildet. Dadurch, dass der Steuerspalt ohne Beteiligung eines weiteren Bauteils zwischen der Federzunge und der Innenwand des Durchflusskanals gebildet wird, ergibt sich sowohl eine kostengünstigere Herstellung der einzelnen Bauteile als auch eine einfachere und kostengünstigere Montage des Dämpfers. In vorteilhafter Weise wird die Bildung des Steuerspalts vereinfacht, wobei sich zudem eine Vereinfachung der Geometrien der einzelnen Bauteile ergibt. Zusätzlich ist der Dämpfer konstruktiv einfacher ausgestaltet und kann somit robuster beziehungsweise weniger störanfällig ausgeführt werden. Dadurch, dass der Steuerspalt ohne Beteiligung eines weiteren Bauteils zwischen der Federzunge und der Innenwand des Durchflusskanals gebildet wird, kann zudem der restliche Bereich der Innenwand des Durchflusskanals eine unpräzisere Formgebung aufweisen und somit einfacher hergestellt werden. In vorteilhafter Weise sind über kleine Veränderungen des Steuerspalts beziehungsweise über kleine Veränderungen der Geometrien der den Steuerspalt bildenden Bauteile Veränderungen der Dämpferkennwerte erzielbar.

Ein erfindungsgemäßer Dämpfer, insbesondere für ein Fahrzeug, umfasst zur Regelung einer Dämpferfluidströmung in mindestens einem Durchflusskanal mindestens eine erfindungsgemäße Federeinheit, um Kennwerte des Dämpfers einzustellen.

Durch die in den abhängigen Ansprüchen aufgeführten Maßnahmen und Weiterbildungen sind vorteilhafte Verbesserungen der im unabhängigen Patentanspruch 1 angegebenen Federeinheit für einen Dämpfer möglich.

Besonders vorteilhaft ist, dass die Federzunge zur Aufbiegung definierte elastische Eigenschaften aufweist, um das Dämpferfluid in Durchflussrichtung passieren zu lassen. In vorteilhafter Weise kann durch die Auslegung der Federzunge auf einfache Weise das Öffnungsverhalten des Federelements verändert werden, so dass der Fluss des Dämpferfluids durch mindestens einen Durchflusskanal gezielt regelbar ist.

Bevorzugt ist die Federscheibe möglichst steif und im Wesentlichen unbeweglich ausgeführt, um eine Fließkraft des strömenden Dämpferfluids aufzunehmen und eine Abdichtfunktion zur Innenwand des Durchflusskanals zu gewährleisten. In vorteilhafter Weise kann die in Form und Herstellung einfache Federscheibe kostengünstig hergestellt werden. In vorteilhafter Weise wird der Steuerspalt ohne Beteiligung eines weiteren Bauteils zwischen der Federzunge und der Innenwand des Durchflusskanals gebildet, wodurch die mit der Innenwand des Durchflusskanals gebildete Funktionsgeometrie nicht an der Innenwand umlaufend vorhanden sein muss, sondern nur in direkter Nähe der Spitze der Federzunge, wo die Präzision für die Stellgenauigkeit notwendig ist. Es ist also möglich, an den restlichen Bereichen der Innenwand des Durchflusskanals eine etwas unpräzisere Formgebung zuzulassen, da diese Formgebung nur eine Abdichtfunktion zwischen Federscheibe und Innenwand nicht aber eine hydraulische Ventilfunktion erfüllt.

In Ausgestaltung der erfindungsgemäßen Federeinheit ist die Federscheibe über einen Formschluss und/oder einen Stoffschluss im Durchflusskanal befestigt. In vorteilhafter Weise ergibt sich hierdurch eine einfache Montage des Federelementes im Durchflusskanal. In weiterer Ausgestaltung der erfindungsgemäßen Federeinheit ist die Federscheibe über einen Bajonettverschluss im Durchflusskanal befestigt. In vorteilhafter Weise kann hierdurch der oben erwähnte Bereich der Innenwand mit präziser Formgebung mit relativ großem Freiheitsgrad optimal gestaltet werden, um die Steuerkantenfunktion für eine Druckstufe und eine Zugstufe des Dämpfers zu erfüllen.

Bevorzugt sind die Federscheibe und die Federzunge materialgleich aus einem Werkstück gefertigt. In vorteilhafter Weise ist hierdurch eine einfache Herstellung des Federelementes und somit der Federeinheit möglich.

In weiterer Ausgestaltung umfasst die erfindungsgemäße Federeinheit mindestens ein erstes Federelement, das in einer in eine erste Durchflussrichtung wirkenden Druckstufe des Durchflusskanals angeordnet ist, und mindestens ein zweites Federelement, das in einer in eine zweite Durchflussrichtung wirkenden Zugstufe des Durchflusskanals angeordnet ist. In einer weiteren Ausgestaltung der erfindungsgemäßen Federeinheit ist zwischen dem ersten Federelement und dem zweiten Federelement eine Zwischenplatte angeordnet. Dadurch, dass der Steuerspalt ohne Beteiligung eines weiteren Bauteils zwischen der Federzunge und der Innenwand des Durchflusskanals gebildet wird, kann die Zwischenplatte als einfaches, vorzugsweise scheibenförmiges Bauteil ausgeführt werden, dessen Herstellung erheblich einfacher und kostengünstiger ist als die derzeit in Dämpfern eingesetzten Zwischenplatten.

Ein Ausführungsbeispiel der Erfindung ist in den Zeichnungen dargestellt und wird in der nachfolgenden Beschreibung näher erläutert.

### Kurze Beschreibung der Zeichnungen

Figur 1 zeigt eine schematische perspektivische Darstellung eines Ausführungsbeispiels eines erfindungsgemäßen Dämpfers mit einem Dämpferzylinder und einer Kolbeneinheit, welche eine Kolbenstange und einen Kolbenstempel umfasst.
Figur 2 zeigt einen Teilschnitt durch die Kolbeneinheit des Dämpfers mit einer erfindungsgemäßen Federeinheit, die zwei Federelemente umfasst, zwischen denen eine Zwischenplatte angeordnet ist.
Fig. 3 zeigt eine Schnittdarstellung eines Ausschnitts der Federeinheit mit zwei Federelementen in einer Seitenansicht, wobei die Federelemente Federscheiben und Federzungen umfassen.
Fig. 4 zeigt den Ausschnitt eines Federelementes mit einer Federscheibe und einer Federzunge aus Fig. 3 in einer Draufsicht.

### Ausführungsformen der Erfindung

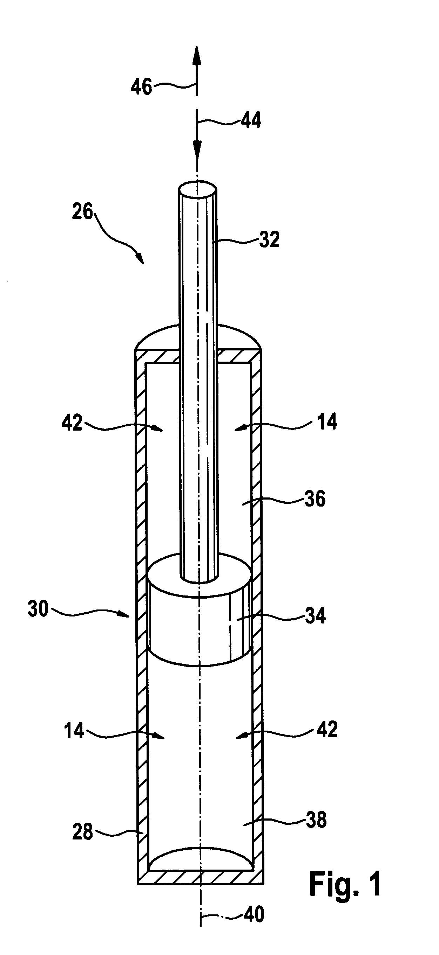

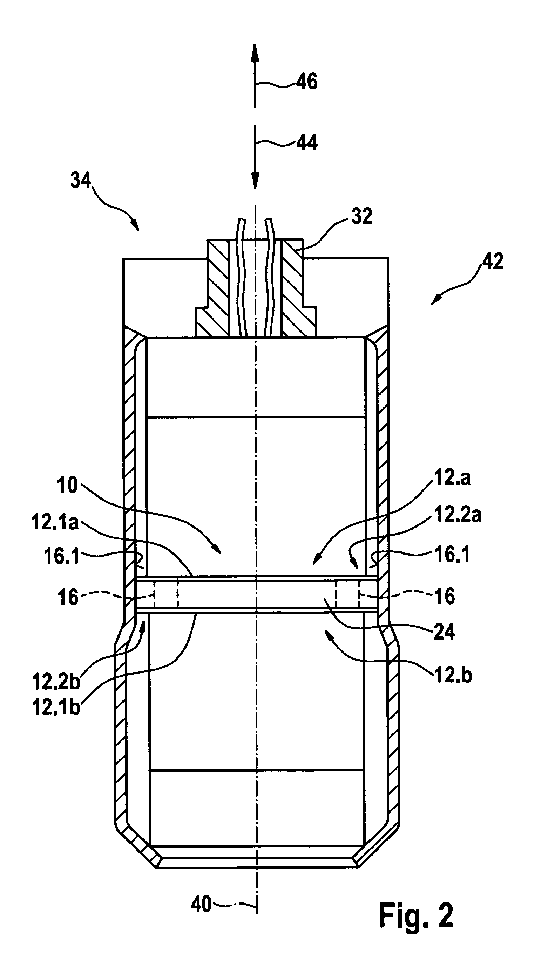

Wie aus Fig. 1 ersichtlich ist, umfasst ein erfindungsgemäßer Dämpfer 26, der vorzugsweise als Stoßdämpfer eines Fahrzeugs ausgeführt ist, einen mit einem Dämpferfluid 14 befüllten Dämpferzylinder 28, in dem eine Kolbeneinheit 30 beweglich angeordnet ist, die eine Kolbenstange 32 und einen Kolbenstempel 34 umfasst, wobei der Kolbenstempel 34 über die Kolbenstange 32 in dem Dämpferzylinder 28 geführt wird. Der Kolbenstempel 34 teilt den Dämpferzylinder 28 in eine obere Dämpferkammer 36 und in eine untere Dämpferkammer 38. Bei einer axialen, vorzugsweise in Richtung einer Hochachse 40 des Dämpfers 26 verlaufenden Bewegung der Kolbenstange 32 und damit des Kolbenstempels 34 gegenüber dem Dämpferzylinder 28 muss das Dämpferfluid 14 durch eine innerhalb des Dämpferzylinders 28 angeordnete Durchflusseinrichtung 42 fließen, die mindestens einen Durchflusskanal 16 aufweist, der in den Fig. 2 bis 4 dargestellt ist. Die Durchflusseinrichtung 42 bildet bevorzugt einen geschlossenen Kreislauf. Im Betrieb beziehungsweise während einer Beanspruchung des Dämpfers 26 strömt durch die in Richtung der Hochachse 40 des Dämpfers 26 beziehungsweise des Dämpferzylinders 28 gerichtete Bewegung der Kolbeneinheit 30 der Dämpferfluidstrom 14 in der Durchflusseinrichtung 42. Die Durchflusseinrichtung 42 umfasst mindestens eine in eine erste Durchflussrichtung 46 wirkende Druckstufe und/oder mindestens eine in eine zweite Durchflussrichtung 44 wirkende Zugstufe. Zur Einstellung von Dämpferkennwerten ist der Fluss des Dämpferfluids 14 durch mindestens einen Durchflusskanal 16 mit Verstellmitteln 10 gemäß Fig. 2 bis 5 regelbar, wobei die Verstellmittel mindestens eine Federeinheit 10 umfassen.

Wie aus Fig. 2 bis 4 ersichtlich, ist eine erfindungsgemäße Federeinheit 10 in die mindestens einen Durchflusskanal 16 aufweisende Durchflusseinrichtung 42 des Fahrzeugdämpfers 26 eingebracht und wird zur Einstellung von Dämpferkennwerten verwendet. Der Durchflusskanal 16 kann beispielsweise in dem Kolbenstempel 34 angeordnet werden, welcher über die Kolbenstange 32 in dem Dämpferzylinder 28 des Fahrzeugdämpfers 26 geführt ist.

Die dargestellte Federeinheit 10 weist vorzugsweise zwei Federelemente 12a, 12b auf, mit welchen zur Einstellung von Dämpferkennwerten der Fluss des Dämpferfluids 14 durch den Durchflusskanal 16 regelbar ist, wobei das erste Federelement 12a in einer in eine erste Durchflussrichtung 46 wirkenden Druckstufe des Durchflusskanals 16 und das zweite Federelement 12b in einer in eine zweite Durchflussrichtung 44 wirkenden Zugstufe des Durchflusskanals 16 angeordnet ist.

Um den Fluss des Dämpferfluids 14 durch mindestens einen Durchflusskanal 16 zur Einstellung von Dämpferkennwerten auf einfache Weise zu ermöglichen, weist das mindestens eine Federelement 12a, 12b eine Federscheibe 12.1 a, 12.1 b mit einer ausgeschnittenen Federzunge 12.2a, 12.2b auf, die mit einer Innenwand 16.1 des Durchflusskanals 16 den mindestens einen Steuerspalt 18a, 18b bildet. Die Federzunge 12.2a, 12.2b wird durch Schneiden, Stanzen oder einem anderen einem Fachmann als sinnvoll erscheinenden Verfahren ausgeschnitten. Der Steuerspalt 18a, 18b und die daran angrenzenden Kanten der Bauteile 12.2a, 12.2b, 16.1, 16 bilden eine Steuerkante, die eine einen Widerstand bildende Funktion gegen das durchströmende Dämpferfluid 14 erfüllt. Die Steuerkante hat unter anderem eine Dämpferkennlinien bestimmende Funktion. Insbesondere dient die Steuerkante zur gezielten Beeinflussung der Durchflussmenge des Dämpferfluids 14 und der Druckdifferenz über den Steuerspalt 18a, 18b. Dass der Steuerspalt 18a, 18b ohne Beteiligung eines weiteren Bauteils zwischen Federzunge 12.2a, 12.2b und Innenwand 16.1 des Durchflusskanals 16 gebildet wird, setzt eine entsprechend präzise Gestaltung der Innenwandgeometrie des Durchflusskanals 16 und der Federzunge 12.2a, 12.2b voraus. Es muss insgesamt ein im Wesentlichen enger Steuerspalt 18a, 18b über die gesamte Höhe h gewährleistet sein, wobei die Höhe h größer oder gleich der maximalen Öffnung der Federzunge 12.2a, 12.2b ist. Insbesondere bei geschlossener Federzunge 12.2a, 12.2b muss ein sehr enger Steuerspalt 18a, 18b vorliegen. Aber auch bei sich öffnender Federzunge 12.2a, 12.2b muss die Geometrie der Innenwand 16.1 des Durchflusskanals 16 mit hoher Genauigkeit konstant beziehungsweise abstimmungsgemäß bleiben.

Die Federzunge 12.2a, 12.2b ist durch zwei Spalte 20a, 20b von der Restfederscheibe 12.1a, 12.1 b getrennt. Vorzugsweise sind die Federscheibe 12.1 a, 12.1 b und die Federzunge 12.2a, 12.2b materialgleich aus einem Werkstück gefertigt.

Zwischen den Federelementen 12a, 12b der Federeinheit 12 ist eine Zwischenplatte 24 angeordnet, die eine Auflagefläche für die Federelemente 12a, 12b bildet. Hierbei sind das in der Druckstufe wirkende Federelement 12a auf der Zwischenplatte 24 und das in der Zugstufe wirkende Federelement 12b unter der Zwischenplatte 24 vorgesehen. Die Federelemente 12a, 12b sind auf der Zwischenplatte 24 zumindest örtlich beziehungsweise teilweise, vorzugsweise durch Schweißen befestigt, um ein Durchkriechen des Dämpferfluids 14 unter den Federscheiben 12.1 a, 12.1 b der Federelemente 12a, 12b zu vermeiden.

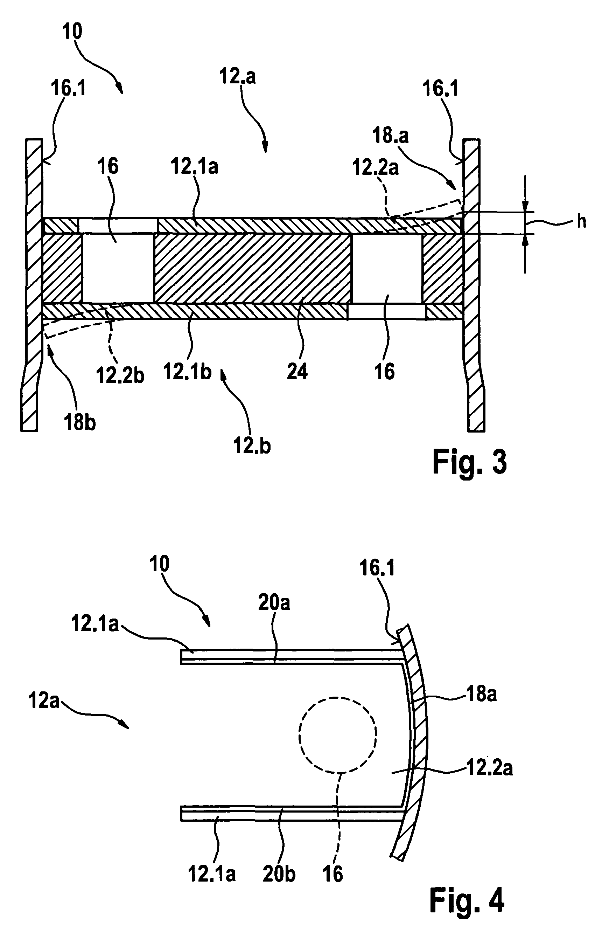

Die Federzunge 12.2a, 12.2b weist zur Aufbiegung eine definierte Federcharakteristik auf, um das Dämpferfluid 14 in die durch Pfeile gemäß Fig. 1 angezeigte Durchflussrichtung 44 oder 46 passieren zu lassen. Fig. 3 zeigt die aufgebogene Federzunge 12.2a des in der Druckstufe wirkenden Federelements 12a und die aufgebogene Federzunge 12.2b des in der Zugstufe wirkenden Federelements 12b.

Die Federscheibe 12.1a, 12.1b ist möglichst steif und im Wesentlichen unbeweglich ausgeführt, um eine Fließkraft des strömenden Dämpferfluids 14 aufzunehmen und eine Abdichtfunktion zur Innenwand 16.1 des Durchflusskanals 16 zu gewährleisten.

Die Federscheibe 12.1 a, 12.1 b ist vorzugsweise über einen Formschluss und/oder einen Stoffschluss im Durchflusskanal 16 befestigt. Hierbei ist vorstellbar, die Montage der Federscheibe 12.1 a, 12.1 b in einer Kombination von einer linearen Bewegung und einer rotatorischen Bewegung auszuführen. Beispielsweise indem die Federscheibe 12.1 a, 12.1 b über einen Bajonettverschluss durch Schieben, Drehen und Positionieren im Durchflusskanal 16 befestigt wird.

## Patentansprüche

1. Federeinheit (10) für einen Dämpfer (26) mit mindestens einem Federelement (12a, 12b), mit welchem zur Einstellung von Dämpferkennwerten ein Fluss eines Dämpferfluids (14) durch mindestens einen Durchflusskanal (16) regelbar ist, der mindestens einen Steuerspalt (18a, 18b) zur Vorgabe einer Dämpfungskennliniencharakteristik aufweist, **dadurch gekennzeichnet, dass** das mindestens eine Federelement (12a, 12b) eine Federscheibe (12.1a, 12.1 b) mit einer ausgeschnittenen Federzunge (12.2a, 12.2b) aufweist, die mit einer Innenwand (16.1) des Durchflusskanals (16) den mindestens einen Steuerspalt (18a, 18b) bildet.

2. Federeinheit nach Anspruch 1, **dadurch gekennzeichnet, dass** die Federzunge (12.2a, 12.2b) zur Aufbiegung definierte elastische Eigenschaften aufweist, um das Dämpferfluid (14) in Durchflussrichtung (44, 46) passieren zu lassen.

3. Federeinheit nach Anspruch 1 oder 2, **dadurch gekennzeichnet, dass** die Federscheibe (12.1a, 12.1b) möglichst steif und im Wesentlichen unbeweglich ausgeführt ist, um eine Fließkraft des strömenden Dämpferfluids (14) aufzunehmen und eine Abdichtfunktion zur Innenwand (16.1) des Durchflusskanals (16) zu gewährleisten.

4. Federeinheit nach einem der Ansprüche 1 bis 3, **dadurch gekennzeichnet, dass** die Federscheibe (12.1 a, 12.1 b) über einen Formschluss und/oder einen Stoffschluss im Durchflusskanal (16) befestigt ist.

5. Federeinheit nach Anspruch 4, **dadurch gekennzeichnet, dass** die Federscheibe (12.1 a, 12.1 b) über einen Bajonettverschluss im Durchflusskanal (16) befestigt ist.

6. Federeinheit nach einem der Ansprüche 1 bis 5, **dadurch gekennzeichnet, dass** die Federscheibe (12.1a, 12.1b) und die Federzunge (12.2a, 12.2b) materialgleich aus einem Werkstück gefertigt sind.

7. Federeinheit nach einem der Ansprüche 1 bis 6, **gekennzeichnet durch** mindestens ein erstes Federelement (12a), das in einer in eine erste Durchflussrichtung (46) wirkenden Druckstufe des Durchflusskanals (16) angeordnet ist, und mindestens ein zweites Federelement (12b), das in einer in eine zweite Durchflussrichtung (44) wirkenden Zugstufe des Durchflusskanals (16) angeordnet ist.

8. Federeinheit nach Anspruch 7, **dadurch gekennzeichnet, dass** zwischen dem ersten Federelement (12a) und dem zweiten Federelement (12b) eine Zwischenplatte (24) angeordnet ist.

9. Dämpfer (26), insbesondere für ein Fahrzeug, wobei zur Einstellung von Dämpferkennwerten der Fluss eines Dämpferfluids (14) durch mindestens einen Durchflusskanal (16) mit Verstellmitteln (10) regelbar ist, **dadurch gekennzeichnet, dass** die Verstellmittel mindestens eine Federeinheit (10) nach einem der Ansprüche 1 bis 8 umfassen.

## Claims

1. Spring unit (10) for a damper (26) having at least one spring element (12a, 12b), by way of which a flow of a damper fluid (14) can be regulated by at least one throughflow channel (16) in order to set damper characteristic values, which throughflow channel (16) has at least one control gap (18a, 18b) in order to preset a damping characteristic-value characteristic, **characterized in that** the at least one spring element (12a, 12b) has a disc spring (12.1a, 12.1b) with a cutout spring tongue (12.2a, 12.2b) which forms the at least one control gap (18a, 18b) with an inner wall (16.1) of the throughflow channel (16).

2. Spring unit according to Claim 1, **characterized in that** the spring tongue (12.2a, 12.2b) has defined elastic properties for bending up, in order to allow the damper fluid (14) to pass in the throughflow direction (44, 46).

3. Spring unit according to Claim 1 or 2, **characterized in that** the disc spring (12.1a, 12.1b) is configured to be as rigid as possible and substantially immovable, in order to absorb a flow force of the flowing damper fluid (14) and to ensure a sealing function with respect to the inner wall (16.1) of the throughflow channel (16).

4. Spring unit according to one of Claims 1 to 3, **characterized in that** the disc spring (12.1a, 12.1b) is fastened via a positively engaging connection and/or a material-to-material connection in the throughflow channel (16).

5. Spring unit according to Claim 4, **characterized in that** the disc spring (12.1a, 12.1b) is fastened via a bayonet closure in the throughflow channel (16).

6. Spring unit according to one of Claims 1 to 5, **characterized in that** the disc spring (12.1a, 12.1b) and the spring tongue (12.2a, 12.2b) are produced from the same material from one workpiece.

7. Spring unit according to one of Claims 1 to 6, **characterized by** at least one first spring element (12a) which is arranged in a compression stage of the throughflow channel (16), which compression stage acts in a first throughflow direction (46), and at least one second spring element (12b) which is arranged in a rebound stage of the throughflow channel (16), which rebound stage acts in a second throughflow direction (44).

8. Spring unit according to Claim 7, **characterized in that** an intermediate plate (24) is arranged between the first spring element (12a) and the second spring element (12b).

9. Damper (26), in particular for a vehicle, it being possible for the flow of a damper fluid (14) to be regulated by at least one throughflow channel (16) with adjusting means (10), in order to set damper characteristic values, **characterized in that** the adjusting means comprise at least one spring unit (10) according to one of Claims 1 to 8.

## Revendications

1. Unité de ressort (10) pour un amortisseur (26) comprenant au moins un élément de ressort (12a, 12b) avec lequel, pour l'ajustement de valeurs caractéristiques d'amortissement, un flux d'un fluide d'amortissement (14) peut être régulé à travers au moins un canal d'écoulement (16) qui présente au moins une fente de commande (18a, 18b) pour prédéfinir une caractéristique de courbe d'amortissement, **caractérisée en ce que** l'au moins un élément de ressort (12a, 12b) présente une rondelle élastique (12.1a, 12.1b) avec une langue élastique (12.2a, 12.2b) découpée, qui forme avec la paroi intérieure (16.1) du canal d'écoulement (16) l'au moins une fente de commande (18a, 18b).

2. Unité de ressort selon la revendication 1, **caractérisée en ce que** la langue élastique (12.2a, 12.2b) présente des propriétés élastiques définies pour la flexion, afin de laisser passer le fluide d'amortissement (14) dans la direction d'écoulement (44, 46).

3. Unité de ressort selon la revendication 1 ou 2, **caractérisée en ce que** la rondelle élastique (12.1a, 12.1b) est réalisée de manière aussi rigide que possible et de manière essentiellement immobile, afin de recevoir une force d'écoulement du fluide d'amortissement s'écoulant (14), et de garantir une fonction d'étanchéité par rapport à la paroi intérieure (16.1) du canal d'écoulement (16).

4. Unité de ressort selon l'une quelconque des revendications 1 à 3, **caractérisée en ce que** la rondelle élastique (12.1a, 12.1b) est fixée par le biais d'un engagement positif et/ou d'un engagement par liaison de matière dans le canal d'écoulement (16).

5. Unité de ressort selon la revendication 4, **caractérisée en ce que** la rondelle élastique (12.1a, 12.1b) est fixée par le biais d'une fermeture à baïonnette dans le canal d'écoulement (16).

6. Unité de ressort selon l'une quelconque des revendications 1 à 5, **caractérisée en ce que** la rondelle élastique (12.1a, 12.1b) et la langue élastique (12.2a, 12.2b) sont fabriquées en le même matériau d'une seule pièce.

7. Unité de ressort selon l'une quelconque des revendications 1 à 6, **caractérisée par** au moins un premier élément de ressort (12a) qui est disposé dans un étage de pression du canal d'écoulement (16) agissant dans une première direction d'écoulement (46), et par au moins un deuxième élément de ressort (12b) qui est disposé dans un étage de traction du canal d'écoulement (16) agissant dans une deuxième direction d'écoulement (44).

8. Unité de ressort selon la revendication 7, **caractérisée en ce qu'**entre le premier élément de ressort (12a) et le deuxième élément de ressort (12b) est disposée une plaque intermédiaire (24).

9. Amortisseur (26), en particulier pour un véhicule, dans lequel pour l'ajustement de valeurs caractéristiques d'amortissement, le flux d'un fluide d'amortissement (14) peut être régulé à travers au moins un canal d'écoulement (16) avec des moyens de réglage (10), **caractérisé en ce que** les moyens de réglage comprennent au moins une unité de ressort (10) selon l'une quelconque des revendications 1 à 8.
